# EUROPEAN PATENT APPLICATION

(11) **EP 3 339 666 A1**
(43) Date of publication of application: **27.06.2018**
(21) Application number: 16836870.2
(22) Date of filing: 21.06.2016
(51) Int. Cl.: F16C 11/04, E05D 7/086, F16F 7/06, F16F 9/14

(54) **HINGE DEVICE**

(30) Priority: 19.08.2015 JP 2015161936
(71) Applicant: Sugatsune Kogyo Co., Ltd., Tokyo 101-8633 (JP)
(72) Inventor: SUZUKI, Masaya, Tokyo 101-8633 (JP)
(74) Representative: Zoli, Filippo
(86) International application number: PCT/JP2016/068352
(87) International publication number: WO 2017/029878

(57) **Abstract**

To provide a hinge device with an actuator unit such as a rotation dumper or the like which may omit engraving and may make appearance good by narrowing a joint. By a hinge device 3, a second member 2 is connected to a first member rotatably. A first cooperation part 11 of the hinge device 3 is rotatably fixed to the first member 1. A connection member 30 is connected to the first cooperation part 11 rotatably about a first axis line L1 and then is fixed rotatably to the second member 2. A second cooperation part 22 is connected to a connection member 30 rotatably about a second axis line L2 and then is made to cooperate with the first cooperation part 11. A first actuator 41 of an actuator unit 40 such as a rotation dumper or the like is fixed rotatably to the second cooperation part 22 and then a second actuator 42 is fixed rotatably to the second member 2. When the second member 2 is made to rotate, the second cooperation part 22 rotates about the first axis line L1 with respect to the first cooperation part 11 and rotates about the second axis line L2 with respect to the second actuator 42.

## Description

### TECHNICAL FIELD

The present invention relate to a hinge device and more particularly relate to a hinge device comprising an actuator unit for generating rotation affecting force including braking and/or biasing force to rotation.

### BACKGROUND ART

Generally, a rotator such as a door or a rotation cover is connected rotatably to a main body of a case or a wall etc. by a hinge. The hinges, which comprise an actuator unit such as a rotation dumper for braking the rotation of the rotator by viscose resistance, a torque unit for enabling a rotator to maintain at an optional angle by friction resistance or a biasing unit for biasing a rotator to a direction assisting the rotation, have been known. Since the actuator unit has a certain size, a space for placing thereof is required.

For one method for keeping the space, the method, which comprises forming engraving inside the rotator or the main body and placing therein the hinge with the actuator, has been known (refer to Patent Literatures 1 and 2 etc.)

As another method, in which the hinge with the actuator unit is attached to the outside of the rotator or the main body as is without forming engraving, has been known.

### PRIOR ART LITERATURES

### PATENT LITERATURES

Patent Literature 1: Japanese Patent Laid-Open No. 2003-19847.
Patent Literature 2: Japanese Utility Model Laid-Open No. Heisei No.5-83261

### SUMMARY OF INVENTION

### PROBLEM TO BE SOLVED BY INVENTION

By placing the hinge with the actuator unit inside the engraving, a joint between the rotator and the main body may become narrow and appearance may become good. However, engraving work consumes elaboration and requires certain techniques and/or sophisticated tools or the like. On the other hand, when the hinge with the actuator unit is attached as is to the outside of the rotator or the main body, the engraving may be omitted. However, the joint becomes wide and the appearance gets worse.

The present invention has been completed considering the above situations, and the purpose is to provide the hinge device with the actuator unit such as the rotation dumper etc., which may omit engraving and may make the joint narrow to bring the appearance good.

### MEANS FOR SOLVING PROBLEM

For solving the above problems, the present invention is characterized in that a hinge device for rotatably connecting a second member to a first member;
a first cooperation part fixed rotatably to the first member;
a connection member connected to the first cooperation part rotatably about a first axis line and fixed rotatably to the second member;
a second cooperation part connected to the connection member rotatably about a second axis line parallel to the first axis line;
an actuation unit comprising a first actuator and a second actuator rotatable with respect to the first actuator about the second axis line to generate rotation affecting force by a relative rotation of the first and the second actuators each other, wherein;
the first actuator is fixed to the second cooperation part rotatably;
the second actuator is fixed to the second member rotatably; and
the first cooperation part and the second cooperation part are cooperated such that when the second member rotates with respect to the first member, the second cooperation part rotates about the first axis line with respect to the first cooperation part and rotates about the second axis line with respect to the second actuator.

According to this hinge device, the first axis line may be disposed at a position which makes the joint between the first member and the second member each other narrow and the second axis line may be disposed at a position passing through the outside of the second member. Thereby, the joint can become small and the engraving can be omitted to bring the appearance good.

By a rotation of the second cooperation part with respect to the second actuator (hereafter fittingly referred to "spin"), the first actuator rotates with respect to the second actuator and the force such as braking force or the like may be generated. By adjusting a ratio of a rotation of the second cooperation part with respect to the first cooperation part (hereafter fittingly referred to "revolution") and the spin, the second member may be made to rotate largely than a rotation stroke of the actuation unit with respect to the first member and it may be able to adjust an effective extent of the actuation unit with respect to a unit rotation degree of the second member.

Here, the rotation affecting force may include the braking force for braking a relative rotation of the first and second actuators each other and the biasing force for biasing relative rotation of the first and second actuators. The braking force may include braking force by viscose resistance of viscose fluid and braking force by friction resistance.

The first cooperation part and the second cooperation part may be constructed by gears meshing each other. Thereby, the first and second cooperation parts may be directly cooperated each other. By setting gear ratios, the ratio between the revolution and the spin may be adjusted. By the first and second cooperation parts, a planetary mechanism may be constructed.

The hinge device may further comprise a cooperation link connected to the first cooperation part rotatably about a third axis line parallel to the first axis line and connected to the second cooperation part rotatably about a fourth axis line parallel to the first axis line. Thereby, the first cooperation part, the cooperation member and the cooperation link may construct a four-bar link.

It may be preferred to comprise further an attachment member retaining the second actuator and fixed to the second member slidably along with the second axis line while the first actuator and the second cooperation part being connected separatably.

Thereby, for example, in the case in which the first cooperation part is disposed such that the first cooperation part is sandwiched between an end face of the second member and the first member while the actuator unit is disposed at the outside, for example, a back side of the second member or the like, after the first and second cooperation parts and the cooperation member are disposed to the first member and the attachment member is disposed to the second member, by sliding the attachment member, the connection member may be fixed and connected. Thus, the hinge device may securely fixed to the first and second members.

### ADVANTAGE OF INVENTION

According to the present invention, in the hinge device with the actuator unit, the engraving for placing the actuator unit may be omitted and the joint may become narrow to bring the appearance good.

### BRIEF DESCRIPTION OF DRAWINGS

[Fig. 1] Fig. 1 (a) is a perspective view of a receptacle device comprising a hinge device according to a first embodiment of the present invention. Fig. 1(b) is a perspective view of the receptacle device in its closed state.
[Fig. 2]Fig. 2 (a) is an exploded perspective view of the hinge device with indicating separately a hinge unit, an attachment member and an unit of rotation dumper. Fig, 2 (b) is an exploded perspective view of a state in which the rotation dumper is attached to the hinge unit.
[Fig. 3] Fig. 3 (a) is an exploded perspective view of the hinge device. Fig. 3 (b) is an exploded perspective view showing the hinge device from different direction.
[Fig. 4] Fig. 4 is a side view of the hinge device in a closed state of the receptacle device along with a VI-VI line in Fig. 5 with omitting a connection member.
[Fig. 5] Fig, 5 is a front cross sectional view of the hinge device in the close state of the receptacle device along with a line V-V in Fig. 4.
[Fig. 6] Fig. 6 is an exploded perspective view of the rotation dumper.
[Fig. 7] Figs. (a)-(d) are perspective views indicating assembling steps of the receptacle device.
[Fig. 8] Fig. 8 is a side view illustrating an open and close states of the receptacle device and the figure (a) shows a state at an open degree of a rotation cover to be zero degree. The figure (b) shows a state at an open degree of a rotation cover to be 45 degrees. The figure (b) shows a state at an open degree =130 degrees of a rotation cover.
[Fig. 9] Fig. 9 is a front cross sectional view of a hinge device according to a second embodiment of the present invention at the closed state.
[Fig. 10] Fig. 10 is an exploded perspective view of a torque unit of the second hinge device.
[Fig. 11] Fig. 11(a) is a perspective view of a receptacle device in the open state comprising a hinge device according to a third embodiment of the present invention. Fig. 11 (b) is a perspective view of a receptacle device in the open state in which a cover member of the hinge device is omitted.
[Fig. 12] Fig. 12 (a) is a perspective view of the hinge device (with omitting the cover member). Fig. 12 (b) is a perspective view of a hinge unit of the hinge device.
[Fig. 13] Fig. 13 is an exploded perspective view of the hinge device. Fig. 13 is an exploded perspective view of the hinge device viewed from the side opposite to the figure (a).
[Fig. 14] Fig. 14 (a) is a front view of the receptacle device corresponding to the figure (b). Fig. 14 (b) is a front view of the hinge unit along with a line XIVb-XIVb in Fig. 16 (d).
[Fig. 15] Fig. 15 (a) is a side view of the hinge device (with omitting the cover member) along with a line XVa-XVa in Fig. 14 (a). Fig. 15 (b) is a side view of the hinge unit along with a line XVb-XVb in Fig. 14 (b).
[Fig. 16] Fig. 16 (a)-(e) are side views illustrating a movement of the hinge unit when the rotation cover is opened and closed.

### EMBODIMENT FOR PRACTICING INVENTION

Hereinafter, embodiments of the present invention will be explained according to drawings.

### <First Embodiment>

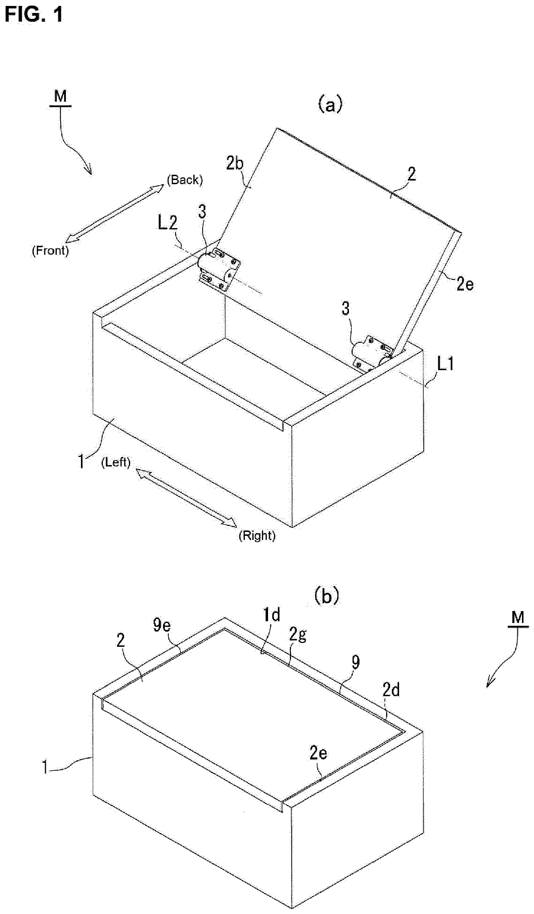

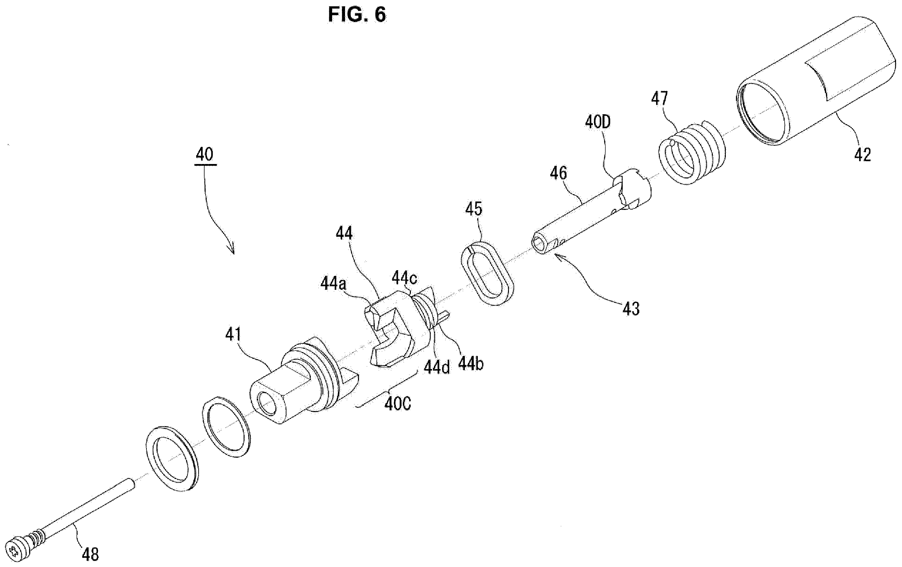

Figs. 1-8 illustrate a first embodiment of the present invention. As indicated in Fig. 1, a receptacle device M comprises a case 1 (first member) and a rotation cover 2 (second member). An upper face of the case 1 is opened and the rotation cover 2 is disposed therein. Between both left and right ends at the far side of the rotation cover 2 and left and right inner walls of the case 1, a pair of hinge devices 3,3 are disposed. Through these hinge devices 3,3, the rotation cover 2 is rotatably connected to the case 1. By the rotation of the rotation cover 2, the receptacle device M may be opened and closed.

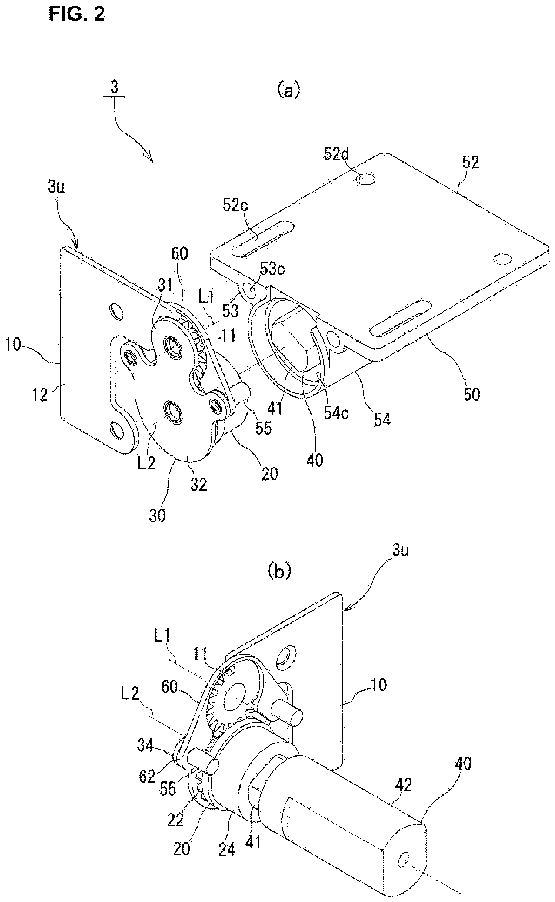

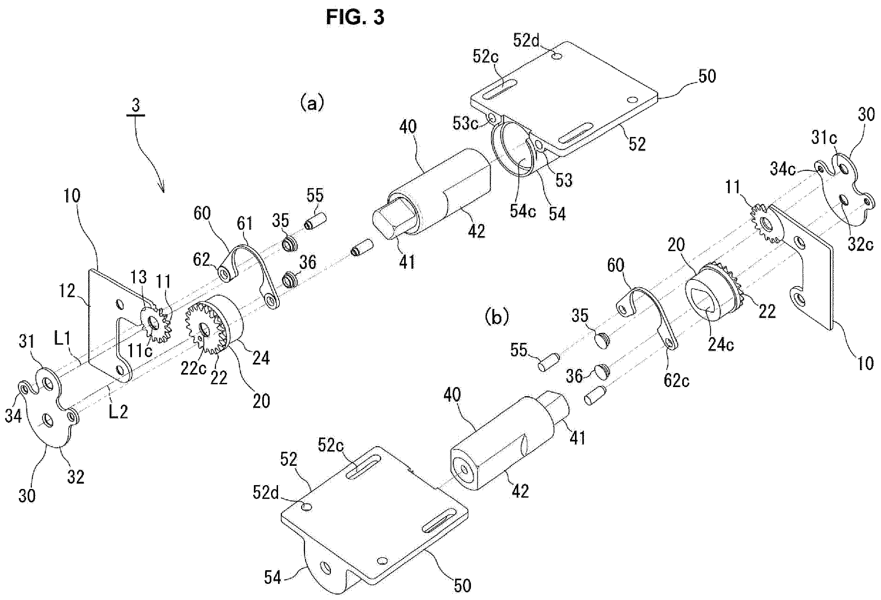

As indicated in Fig. 2 and Fig. 3, the hinge device 3 comprises a hinge plate 10, a second gear unit 20, a connection member 30 (connection arm), a rotation dumper 40 and a fixing member 50. The hinge plate 10 is formed to a planer plate having an approximate U-shape. The hinge plate 10 (as well as a first gear 11 described elsewhere) is fixed to the left and right inner walls of the case 1 by screwing etc.

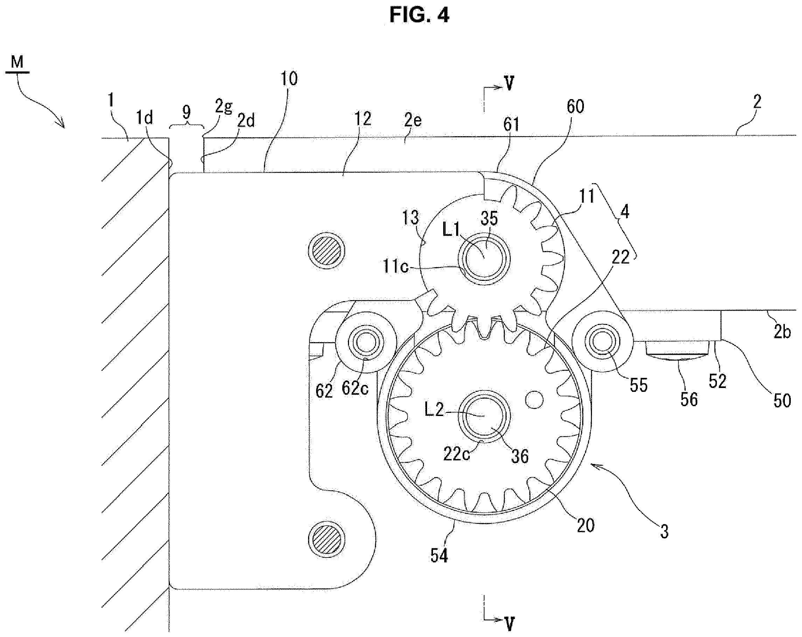

As indicated in Fig. 4, to one end at an upper side of the hinge plate 10, a first gear 11 (first cooperation part) is disposed. The first gear 11 is a partial gear of which teeth are formed only for the part extending from two third to three fourth of a circumference thereof about a center thereof. The first gear 11 is integrally formed to the hinge plate 10 and the hinge plate 11 is fixed to the case 1 such that the first gear 11 may be rotatably fixed. At the center of the first gear 11, a first cooperation hole 11c is formed.

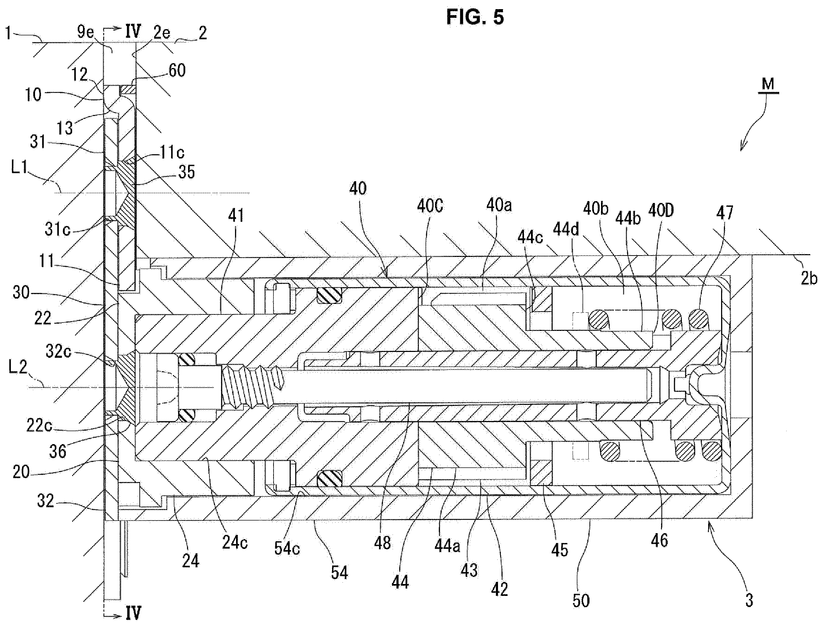

A center axis of the first gear 11 and the first cooperation hole 11c defines a first axis line L1. As indicated in Fig. 5, the first axis line L1 extends horizontally and crosses to left and right end faces 2e of the rotation cover 2 and passes inside the rotation cover 2.

As indicated in Fig. 4 and Fig. 5, the first gear 11 protrudes to a side of the rotation cover 2 beyond a plate body 12 other than the first gear 11 in the hinge plate 10 (in Fig. 4, the far side of the sheet and in Fig. 5, right side). When viewed from the case side 1 (in Fig. 4, the near side of the sheet and in Fig. 5, left side), a part forming the first gear 11 in the hinge plate 10 becomes concaved with respect to a plate body 12. Between the plate body 12 and the first gear 11, a step 13 is formed. As described in Fig. 4, the step 13 has an arch shape which interpolates a tooth bottom circle of the first gear 11.

As indicated in Fig. 5, the first gear 11 is sandwiched between the case 1 and the end face 2e of the rotation cover 2. A thickness of the hinge plate 10 including the first gear 11 is an extent received in a gap 9e between the case 1 and the end face 2e of the rotation cover 2 and is, for example, about 1 mm-several mm.

As indicated in Fig. 3, the second gear unit 20 comprises integrally a second gear 22 and an axis connection tube 24. The axis connection tube 24 has a cylindrical shape. In the axis connection tube 24, an axis engagement hole 24c is formed. The axis engagement hole 24c extends to an end face which faces to the side of the rotation cover 2 in the axis connection tube 24 (in Fig. 5, right side) to define opening. As indicated in Fig. 3 (b), a cross section of the axis engagement hole 24c is shaped to a long hole shape, i.e., a non-circular shape.

As indicated in Fig. 3 (a), at the end face facing to the case 1 in the axis connection tube 24 (in Fig. 5, left side), the second gear 22 is integrally formed. As indicated in Fig. 4, the second gear 22 is a full gear to which teeth are provided to the entire circumference and has a larger diameter than that of the first gear 11. Numbers of teeth of the second gear 22 is much more than the numbers of teeth if the first gear 11 is assumed to be a full gear.

As indicated in Fig. 3 (a), at the center of the second gear 22, a second cooperation hole 22c is provided. As indicated in Fig. 5, the second cooperation hole 22c passes through the second gear 22 in the thickness direction to connect with the axis engagement hole 24c.

As indicated in Fig. 4, the center axes of the second gear 22 and the second cooperation hole 22c define a second axis line L2. The second axis line L2 extends parallel to the first axis line L1 and is located eccentrically to the first axis line L1 so as to pass the outside of the rotation cover 2. For details, the second axis line L2 is positioned apart downwardly from the rotation cover 2 at its closed position and parallel to the rotation cover 2. The second axis line L2 is fixed in the position thereof with respect to the rotation cover 2.

As indicated in Fig. 4, the first gear 11 and the second gear 22 are cooperated by meshing each other. The first gear 11 and the second gear 22 construct a rotation cooperation means 4. The second gear 22 is made to revolve about the first gear 11 (i.e., the first axis line LI) integrally with the rotation cover 2 while spinning about the second axis line L2 (relative rotation with respect to the rotation cover 2).

As indicated in Fig. 3, the connection member 30 is a planar plate with a multi-circular shape. For details, the connection member 30 comprises a first pivot support 31, a second pivot support 32 and a pair of connection fixtures 34, 34. The first pivot support 31 has a circular shape. At the center of the first pivot support 31, a first pivot support hole 31c is formed. The second pivot support 32 has a circular shape which is larger than the first pivot support 31 and is located eccentrically to the first pivot support 31 while integrated continuously to the first pivot support 31. At the center of the second pivot support 32, a second pivot support hole 32c is formed. The connection fixture 34 has a circular shape smaller than the first pivot support 31. At the center of the connection fixture 34, a connection screw hole 34c is formed. A pair of the connection fixtures 34, 34 are disposed at the both sides of the first pivot support 31 while integrated continuously to the first pivot support 32.

As indicated in Fig. 5, the connection member 30 is disposed approximately coplanar with the plate body 12 such that the connection member 30 associate with an inner face of the case 1. The first pivot support 31 overlaps to the face which faces to the case 1 in the first gear 11. A part of a circumferential edge of the first pivot support 31 associates with the step 13. The first pivot support hole 31c at the center of the first pivot support 31 is disposed on the first axis line L1 and is connected to the first cooperation hole 11c. To the first cooperation hole 11c and the first pivot support hole 31c, a first axis stopper pin 35 is inserted. An axis line of the first axis stopper pin 35 is aligned to the first axis line L1. Through the first axis stopper pin 35, the first pivot support 31 is connected to the first gear 11 relatively and rotatably about the first axis line L1. Thereby, the connection member 30 is rotatably disposed about the first axis line L1 with respect to the first gear 11 (first cooperation part).

As indicated in Fig. 5, the second pivot support 32 protrudes downwardly beyond the rotation cover 2 at its closed position. The second pivot support hole 32c at the center of the second pivot support 32 is disposed on the second axis line L2 and is connected to the second cooperation hole 22c. To the second cooperation hole 22c and the second pivot support hole 32c, a second axis stopper pin 36 is inserted. An axis line of the second axis stopper pin 36 is aligned to the second axis line L2. Through the second axis stopper pin 36, the second gear unit 20 and the second pivot support 32 are connected relatively and rotatably about the second axis line L2. Also the second gear 22 and the connection member 30 are connected relatively and rotatably about the second axis line L2.

As indicated in Fig. 2(b), to the connection member 30, a gear cover 60 is fixed. The gear cover 60 has a reverse V-shape. A curved center 61 of the gear cover 60 overlaps over an upper side of the first gear 11. Thereby, the first gear 11 is prevented from stain with dusts or the like. Both ends 62 of the gear cover 60 are overlapped with the connection fixtures 34 of the connection member 30. At the ends 62, attachment holes 62c are formed.

Connection pins 55 are screwed into the connection screw holes 34c through the attachment holes 62c. Thereby, the gear cover 60 is fixed to the connection member 30. The connection pins 55 protrude to an opposite side (to an attachment member 50 side) of the connection member 30 beyond the gear cover 60.

As indicated in Fig. 5, the attachment member 50 is disposed at a back face 2b of the rotation cover 2 (lower face in the figure). As indicated in Fig. 2(a), the attachment member 50 includes integrally an attachment part 52 and a receptacle part 54. The attachment part 52 has a planer shape. To the attachment part 52, a pair of long hole shaped attachment hole 52c and a just circle attachment hole 52d. The attachment hole 52c extends parallel along with the second axis line L2.

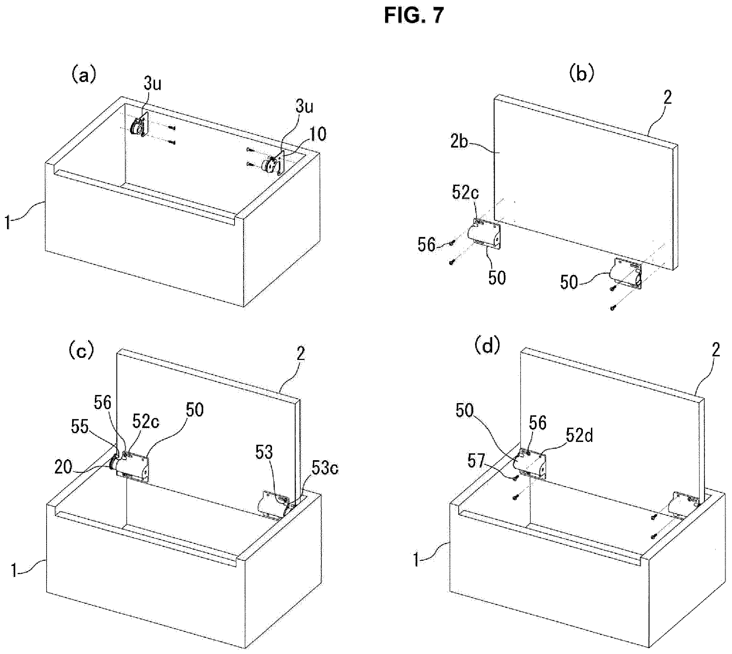

As indicated in Fig. 7 (c), a screw 56 is screwed in the rotation cover 2 through the long hole shaped attachment hole 52c. The attachment hole 52c extends parallel and longitudinally with the second axis line L2. As indicated in Fig. 7 (d), a screw 57 is screwed in the rotation cover 2 through the circle shaped attachment hole 52d. Under the condition which the screw 56 is loosened and the screw 57 is removed, the attachment part 52 may be slidable to a direction along with the second axis line L2. That is to say, the attachment member 50 is fixed to the rotation cover 2 slidably along with the second axis line L2.

As indicated in Fig. 2 (a), at an end in the attachment member 50, which faces to the second gear unit 20, a pair of connection parts 53, 53 are formed across the receptacle part 54. To the connection part 53, pin holes 53c are formed. Into the pin holes 53c, the pins 55 are replaceably inserted. Thereby, the connection part 53 and the second pivot support 32 are separatably connected through the connection pins 55 and furthermore, the connection member 30 is fixed to the rotation cover 2 through the attachment member 50.

As indicated in Fig. 2 (a), the receptacle part 54 is formed to a cylindrical shape and is integrated continuously to the attachment part 52. The receptacle part 54 is disposed on the second axis line L2. In the receptacle part 54, a receptacle room 54c is formed. The receptacle room 54c opens toward the second gear unit 20 (in Fig. 5, left side). Although detailed illustration is omitted, a cross sectional shape of an inner circumferential face of the part at the farther side than the opening side of the receptacle room 54c (in Fig. 5, right side) is a non-circular shape.

As indicated in Fig. 5, in the receptacle room 54c, a rotation dumper 40 (actuator unit) is retained. The rotation dumper 40 has the similar structure to the one which has been disclosed in Patent No. 4064235 and comprises a first actuator 41, a second actuator 42, and a braking force generator 43 (rotation affecting force generator).

As indicated in Fig. 5, the second actuator 42 has a cylindrical shape with axis line extending along with the second axis line L2 while opening toward the second gear unit 20 (in Fig. 5, left side). As indicated in Fig. 2 (b), an outer circumference face of the second actuator 42 except for the part at the opening side has a non-circular cross section. As shown in Fig. 5, since the second actuator 42 in the non-circular cross section is retained in the non-circular cross sectional receptacle room 54c, the second actuator 42 may be held non-rotatably in the receptacle part 54. Furthermore, the second actuator 42 is fixed rotatably to the rotation cover 2 through the attachment member 50.

As indicated in Fig. 5, in the second actuator 42, the first actuator 41, a piston 44, a valve 45, a cam member 46, and a coil spring 47 are retained. The first actuator 41 has a general axis shape and is disposed on the second axis line L2. The first and the second actuators 41, 42 are relatively rotatable each other about the second axis line L2. As indicated in Fig. 2 (a), the first actuator 41 is positioned adjacent to the opening of the receptacle room 54c. As indicated in Fig. 5, to the opening of the receptacle room 54c, the axis connection cylinder 24 of the second gear unit 20 is inserted and the axis connection cylinder 24 and the first actuator 41 are separatably connected. In turn, the second gear 22 (second cooperation part) and the first actuator 41 are separatably connected. As indicated in Fig. 2 (b), a cross section of the outer circumference face of the first actuator 41 has a non-circular shape. This non-circular cross section first actuator 41 is engaged into the non-circular cross section axis engagement hole 24c so that the first actuator 41 is fixed with respect to the rotation (non-rotatably connected) to the second gear 22.

As indicated in Fig. 5, the piston 44 comprises a large diameter part 44a and a small diameter part 44b. The step between these large and small diameter parts 44a, 44b provides a valve seat 44c. The piston 44 is movable to the axis line direction and is non-rotatable with respect to the second actuator 42. To the first actuator 41 and the large diameter part 44a of the piston, a first cam mechanism 40c meshing each other is formed. As indicated by a two-dot chain line in Fig. 5, at a circumferential side twisted 90 degrees from the cross section of the small diameter part 44b of the piston in Fig. 5, a spring receiver part 44d is formed. By butting the coil spring 47 to the spring receiver part 44d, the piston 44 is biased to the side of the second gear unit 20.

Here, the coil spring 47 may be omitted.

Into the piston 44, the cam member 46 is inserted relatively and rotatably. The cam member 46 cannot be movable to the axis line direction with respect to the second actuator 42 and is non-rotatable with respect to the first actuator 41. To the small diameter part 44b of the piston and the cam part 46, a second cam mechanism 40D meshing each other is formed.

As indicated in Fig. 5, to the small diameter part 44b of the piston, a valve body 45 having a long hole and ring shape is engaged. By the valve body, the space between an inner circumference of the second actuator 42 and an outer circumference of the piston 44 is separated to a first damper room 40a at the large diameter part 44a side and a second damper room 40b at the small diameter part 44b side. In the first damper room 40a and the second damper room 40b, viscose fluid are filled.

By the structural elements disposed between the first actuator 41 and the second actuator 42 in the rotation dumper 40, i.e., the piston 44, the valve body 45, the cam member 46, the cam mechanisms 40c, 40d and the viscose fluid, the braking force generator 43 is constructed.

As the first actuator 41 and the cam member 46 rotate to the counterclockwise direction relative to the second actuator 42 in Fig. 4, by the second cam mechanism 40D, the piston 44 is moved toward the second gear unit 20 side (in Fig. 5, left side). At this time, the viscose fluid in the first damper room 40a flows into the second damper room 40b and according to this flow, the valve body 45 become apart from the valve seat 44c so that the first dumper room 40a and the second dumper room 40b may become in fluid-communication. Thus, the braking force is not generated.

As the first actuator 41 and the cam member 46 rotate to the clockwise direction in Fig. 4 relative to the second actuator 42, the piston 44 is shifted to the direction opposite to the second gear unit 20 (in Fig. 5, right side) by the first cam mechanism 40c. At this time, the viscose fluid in the second dumper room 40b flows into the first dumper room 40a. In accordance with this flow, the valve body 45 takes seat on the valve seat 44c such that the first dumper room 40a and the second dumper room 40b are cut off. Thereby, the braking force is generated by the viscose resistance of the viscose fluid. That is to say, with respect to the relative rotation of the first actuator 41 to the second actuator 42, the braking force generator 43 generates the braking force (rotation affecting force).

By an adjusting member 48, the braking force may be adjusted.

In the rotation dumper 40, the first cam mechanism 40C and the second cam mechanism 40D always keep the contact condition each other. Therefore, when the first actuator 41 are rotated to the clockwise direction just after its rotation to the counterclockwise direction, the braking force can be immediately effective without any delay.

Here, a rotation stroke of the rotation dumper 40 (a rotatable angle range of the first actuator 41 with respect to the second actuator 42) may be, for example, 100-110 degrees due to restriction of guidable angles of the cam mechanisms 40C, 40D.

The receptacle device M may be assembled as follows:
As indicated in Fig. 2 (a), the hinge plate 10, the second gear unit 20, the connection member 30, the connection pins 55 and the gear cover 60 have been assembled beforehand as the hinge unit 3u.

As indicated in Fig. 7 (a), the hinge plate 10 of the hinge unit 3u is attached to the inner wall of the case 1.

As indicated in Fig. 7 (b), to the rear face 2b of the rotation cover 2, the attachment member 50 is fixed temporarily. That is to say, by screwing the screws 56 into the rotation cover 2 through the attachment hole 52c and loosening the screws 56, the attachment member 50 may be kept slidably to left and right. In the attachment member 50, the rotation dumper 40 has been installed beforehand.

Next, as indicated in Fig. 7 (c), the rotation cover 2 is aligned to the case 1 and then the attachment member 50 is made slide toward the inner wall of the case 1 outwardly in either left or right. Then the connection pins 55 are inserted into the pin holes 53c. At this time, the first actuator 41 is inserted into the axis engagement hole 24c so as to be engaged to the second gear unit 20.

When the rotation cover 2 of the receptacle device M is subjected to open and close operations, the connection member 30 integrated to the rotation cover 2 is made to rotate in the counterclockwise direction about the first axis line L1. Thus, the first axis line L1 becomes as the rotation axis of the rotation cover 2 such that the rotation cover 2 is rotated about the first axis line L1 with respect to the case 1.

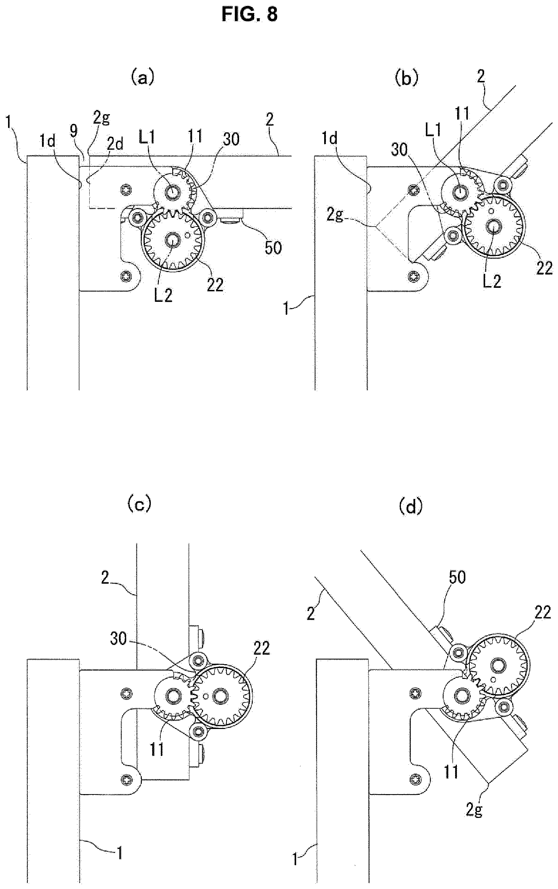

When the rotation cover 2 is subjected to the open operation from the closed state (in Fig. 8, the counterclockwise rotation operation), the connection member 30 and the attachment member 50 integrated to the rotation cover 2 are made to rotate toward the counterclockwise direction about the first axis line L1. Accordingly, the second gear unit 20 is made to rotate (revolve) toward the counterclockwise direction with respect to the first gear 11 as well as the case 1 about the first axis line L1 and by the meshing (cooperation) with the first gear 11, the second gear unit 20 is made rotate (spin) with respect to the second actuator 42 as well as the rotation cover 2 about the second axis line L2 toward the counterclockwise direction. Thereby, the first actuator 41 is made rotate toward the counterclockwise direction about the second axis line L2 with respect to the second actuator 42. Therefore, when the rotation cover 2 is opened, the braking force due to the rotation dumper 40 cannot be generated. Thereby, the rotation cover 2 can be opened with light power.

When the rotation cover 2 is subjected to the close operation from the open state (in Fig. 8, the clockwise rotation operation), the rotation cover 2, the connection member 30 and the attachment member 50 integrated to the rotation cover 2 are made to rotate toward the clockwise direction about the first axis line L1. Accordingly, the second gear unit 20 is made to rotate (revolve) toward the clockwise direction with respect to the first gear 11 as well as the case 1 about the first axis line L1 and by the meshing (cooperation) with the first gear 11, the second gear unit 20 is made to rotate (spin) with respect to the second actuator 42 as well as the rotation cover 2 about the second axis line L2 toward the clockwise direction. Thereby, the first actuator 41 is made to rotate about the second axis line L2 with respect to the second actuator 42 toward the clockwise direction. Therefore, when the rotation cover 2 is closed, this braking force may prevent from vigorous closing of the rotation cover 2.

As indicated in Figs. (a)-(b), according to the receptacle device M, when the rotation cover 2 is made to rotate from the close state to the open state, the second gear unit 20 as well as the second axis line L2 may be shifted to the direction going away from the inner wall 1d at the far side of the case 1. Thereby, an edge 2g formed by the upper face of the rotation cover 2 and the end face 2d at the far side cannot interfere with the inner wall 1d at the far side of the case 1. Therefore, as indicated in Fig. 1 (b) and Fig. 8 (a), the joint 9 between the end face 2d at the far side of the rotation cover 2 and the inner wall 1d at the far side of the case 1 can be narrowed such the the appearance may be brought good. In addition, by disposing the second axis line L2 passing through the outside of the rotation cover 2 as the center of the rotation dumper 40, the rotation dumper 40 may be disposed at the outside of the rotation cover 2 and thus, the engraving for receiving the rotation dumper 40 can be omitted so that the elaboration for making the receptacle device M may be simplified.

According to the receptacle device M, by setting a gear ratio between the first gear 11 and the second gear 22, difference in the rotation stroke of the rotation dumper 40 and the open-close stroke of the rotation cover 2 may be adjusted. That is to say, since in this embodiment, the gear ratio of the second gear 22 to the first gear 11 is larger than 1, the spin speed of the first actuator 41 becomes lower than the open-close speed of the rotation cover 2. Therefore, this is adaptable even if the rotation stroke of the rotation dumper 40 is less than the open-close stroke of the rotation cover 2. For example, even if the first actuator 41 could not rotate as small as about 100-110 degrees to the second actuator 42, the rotation cover 2 may be made to rotate in 130 degrees or more.

Reverse to the above embodiment, when the gear ratio of the second gear 22 to the first gear 11 is set less than 1, the first actuator 41 may be made to rotate largely than the open-close angle of the rotation cover 2 with respect to the second actuator 42. Thereby, effectiveness of the braking force of the rotation dumper 40 may be improved.

Next, other embodiments of the present invention will be explained. In the following embodiments, the constructions geminate with the said embodiment will be provided with the same signs in drawings and the explanation therefor will be omitted.

### <Second Embodiment>

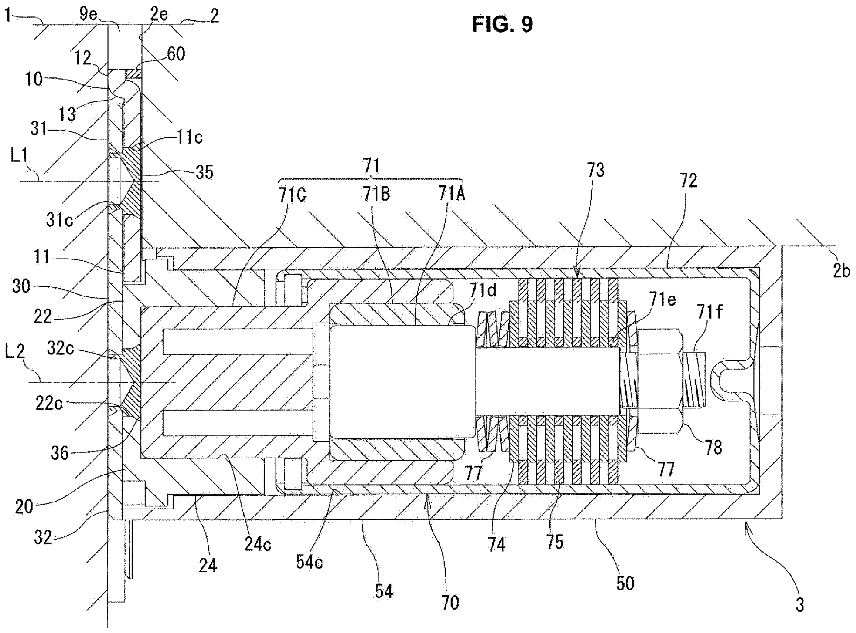

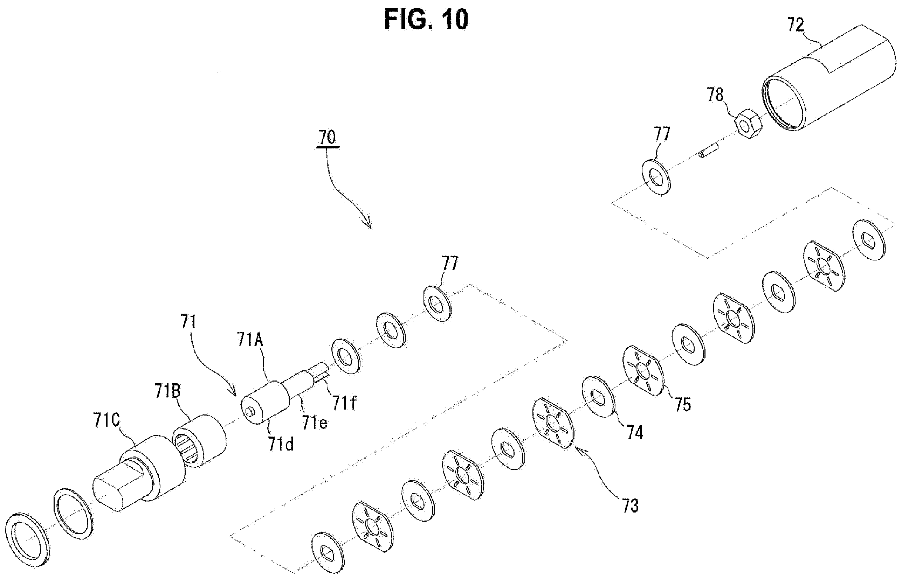

Fig. 9 and Fig. 10 illustrate a second embodiment of the present invention. As indicated in Fig. 9, in the second embodiment, as the actuator unit, in place of the rotation dumper 40, a torque unit 70 is used. The torque unit 70 comprises a first actuator 71, a second actuator 72 and a friction resistance generator 73 (rotation affecting force generator).

The second actuator 72 is formed to a cylindrical shape having a noncircular cross section except for an circular opening side. This second actuator 72 is received in the attachment member 50 and is retained non-rotatably. In the second actuator 72, the first actuator 71 is received relatively and rotatably about the second axis line L2.

The first actuator 71 comprises a main axis member 71A, an one-way unit 1B and a connection axis member 71C. The main axis member 71A comprises integrally a large diameter axis part 71d, a small diameter axis part 71e having smaller diameter than that of the large diameter axis part 71d while having a non-circular cross section, and a screw part 71f with a slit. The large diameter axis part 71d is disposed at the side of the second gear unit 20; the smaller diameter axis part 71e is disposed at the middle; and the screw part 71f is disposed at the side opposite to the second gear unit 20. To the large diameter axis part 71d, the connection axis member 71C continues through the one-way unit 71B. The connection axis member 71C protrudes from the second actuator 72 and is connected to the second gear unit 20 non-rotatably.

The one-way unit 71B transfers torque between the connection axis member 71C and the main axis member 71A when the connection axis member 71C rotates to a certain direction toward the second actuator 72 (in Fig. 4, corresponding to the clockwise direction). On the other hand, when the communication axis member 71C rotates to the direction opposite to the second actuator 72 (in Fig. 4, corresponding to the counterclockwise direction) the one-way unit 71B cuts off the transfer of the torque.

As indicated in Fig. 10, the friction resistance generator 73 comprises a plurality of axis side firction plates 74 with relatively small diameter having an annular shape and a plurality of cylinder side friction plates 75 with relatively large diameter having an annular shape, respectively. These axis side friction plates 74 and the cylinder side friction plates 75 are alternatively placed side by side and are fitted at outer circumference of the small diameter axis part 71e and are received in the second actuator 72. The axis side friction plate 74 has an inner circumference shape with a non-circular shape and is fixed rotatably to the small diameter axis part 71e with the non-circular cross section while being rotatable with respect to the second actuator 72. The cylinder side friction plate 75 has an outer circumference shape with a non-circular shape and is fixed rotatably to the second actuator 72 while being rotatable with respect to the main axis member 71A.

As indicated in Fig. 9, between the gap between the large and small axes 71d, 71e each other of the main axis member 71 and the friction plates 74, 75, a plurality of disc springs (biasing means) are disposed. To the screw part 71f, an adjustment nut 78 is screwed. Between the adjustment nut 78 and the laminated structure of the friction plates 74, 75, the disc spring 77 are also disposed. By fastening the adjustment nut 78, the spring force of the disc spring 77 works to urge the axis side friction plate 74 and the cylinder side friction plate 75 strongly each other.

When the rotation cover 2 is opened by rotating the rotation cover 2 toward the counterclockwise direction in Fig. 4, the second gear unit 20 revolves toward the direction corresponding to the counterclockwise direction about the first axis line L1 in Fig. 4 with respect to the case 1 and due to the meshing with the first gear 11, spins to the direction corresponding to the counterclockwise direction about the second axis line L2 in Fig. 4 with respect to the rotation cover 2. The connection axis member 71C integrally with this second gear unit 20 rotates toward the direction corresponding to the counterclockwise direction in Fig. 4 with respect to the second actuator 72. At this time, by the action of the one-way unit 71B, the rotation torque of the connection axis member 71C cannot be transferred to the main axis member 71A. Thus, the friction resistance of the friction resistance generator 73 may not be generated such that the rotation cover 2 may be rotated freely to the open direction.

When closing by rotating the rotation cover 2 toward the direction corresponding to the clockwise direction in Fig. 4, the second gear unit 20 revolves to the direction corresponding to the clockwise direction in Fig. 4 about the first axis line L1 with respect to the case 1 and spins toward the direction corresponding to the clockwise direction in Fig. 4 about the second axis line L2 with respect to the rotation cover 2. The connection axis member 71C integrally with this second gear unit 20 rotates toward the direction corresponding to the counterclockwise direction in Fig. 4 with respect to the second actuator 72. At this time, the rotation torque of the connection axis member 71C is transferred to the main axis member 71A through the action of the one-way unit 71B. Thus, the axis side friction plate 74 tries to rotate relatively with respect to the cylinder side friction plate 75 and the braking force may be generated between these friction plates 74, 75 each other due to the friction resistance. By this braking force, the rotation cover 2 may be kept at an optional opening angle.

By adjusting the fastening amount of the adjusting nut 78, a magnitude of the braking force due to the friction resistance may be increased and decreased.

Also in the second embodiment, the engraving can be omitted and the appearance may be good by narrowing the joint 9.

### <Third Embodiment>

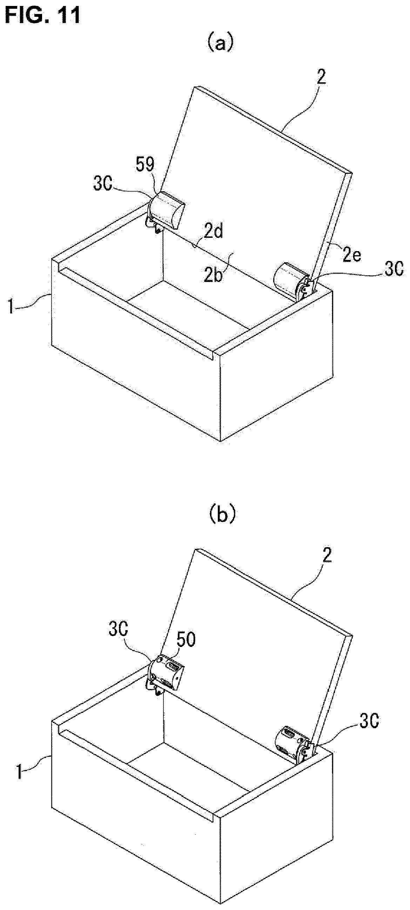

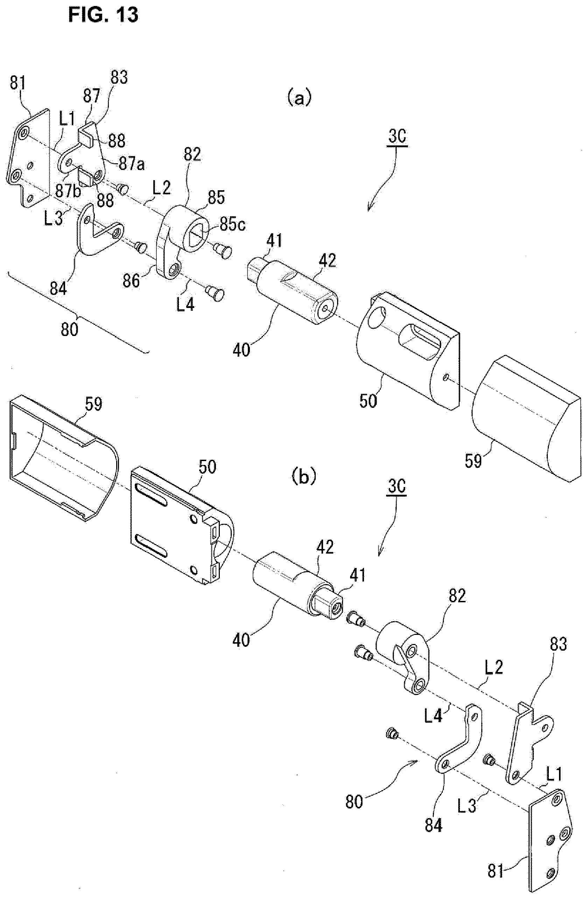

Fig. 11-Fig. 16 illustrates a third embodiment of the present invention. As indicated in Fig. 11, the hinge device 3C of the third embodiment connects rotatably the rotation cover 2 (second member) to the case 1 (first member). As indicated in Fig. 13, the hinge device 3C comprises a hinge unit 80 and the rotation dumper 40 (actuator unit). The hinge unit 80 comprises a first cooperation member 81, a second cooperation member 82 and a cooperation link 84.

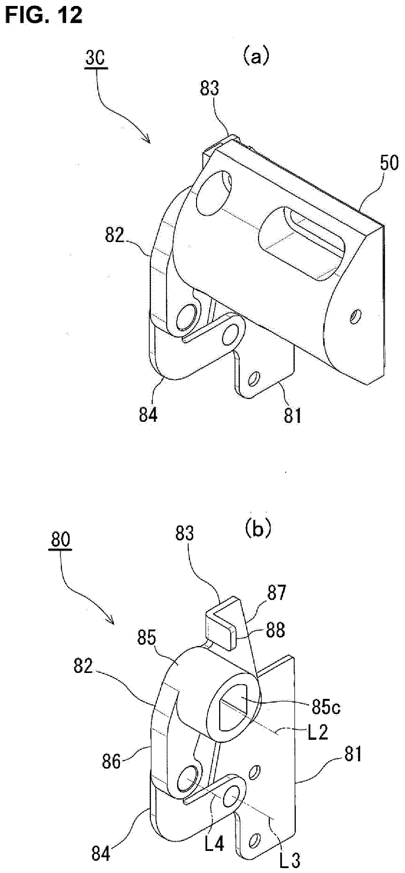

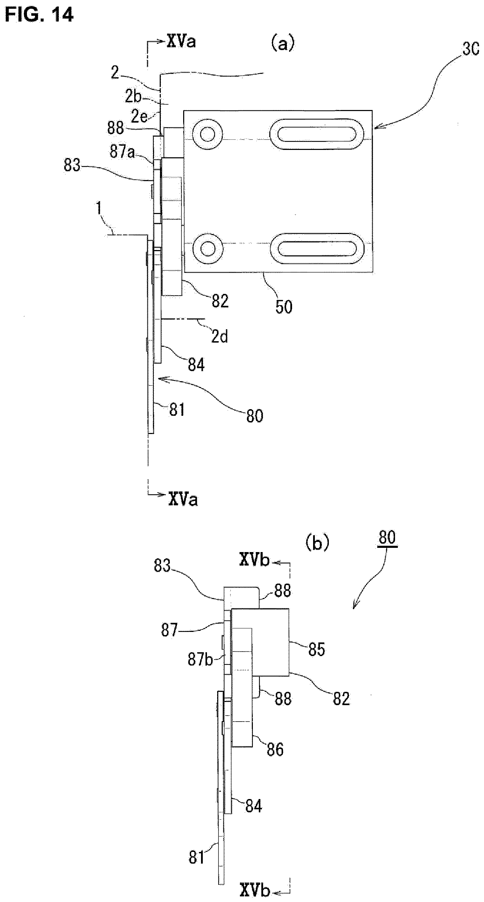

As indicated in Fig. 12 and Fig. 14, the first cooperation member 81 (first cooperation part) is shaped to a planer plate and is fixed rotatably with respect to the case 1 through screwing or the like.

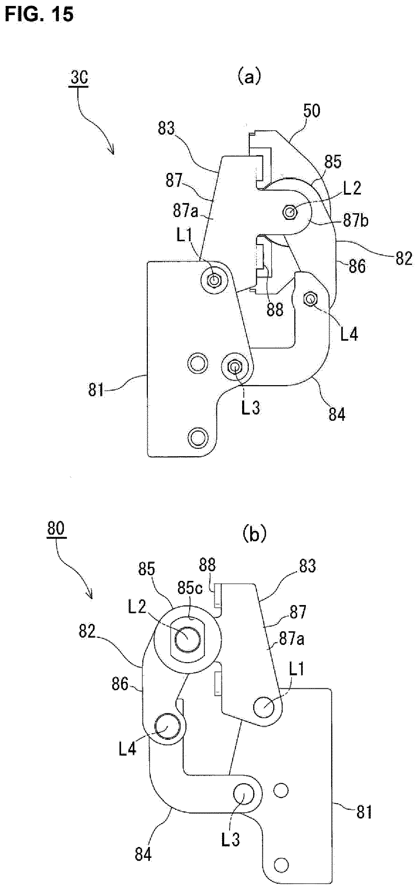

As shown in Fig. 13 and Fig. 15, the connection member 83 comprises a planer plate part 87, a pair of protrusion tips 88,88. The planer plate part 87 comprises a width plate 87a and a leg plate 87b to be formed to a planar shape having an about T-shape. At the both sides across the leg plate 87b in the width plate 87a, the protrusion tips 88 are disposed, respectively. The protrusion tips 88 are orthgonal to the planar plate 87.

As indicated in Fig. 14, the width plate 87a of the connection member 83 is made to associate with the first cooperation member 81, and as indicated in Fig. 15, one end of the width plate 87a is connected rotatably about the first axis line L1 with respect to the first cooperation member 81. Thereby, the connection member 83 is connected rotatably with respect to the first cooperation member 81 as well as the case 1.

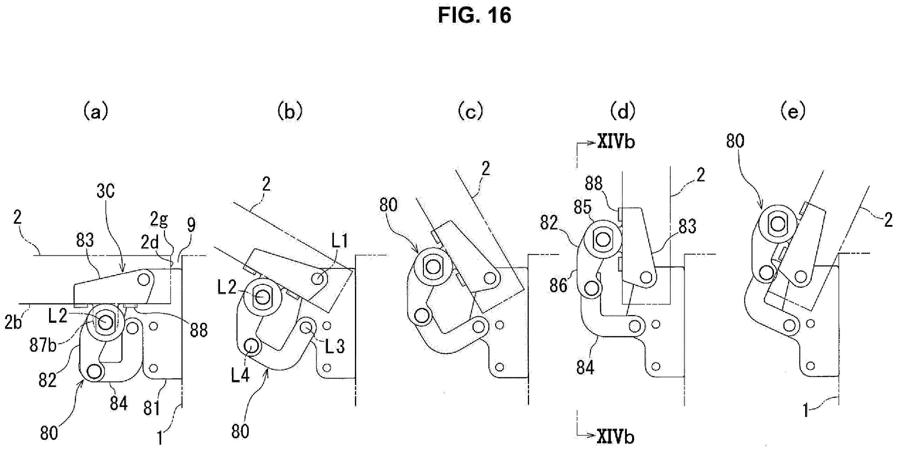

As indicated in Fig. 14 (a), the width plate 87a of the connection member 83 is further fixed for the end face 2e of the rotation cover 2 and the protrusion tips 88 are fixed for the back face 2b of the rotation cover 2. The connection member 83 is fixed rotatably to the rotation cover 2. As indicated in Fig. 16 (a), the leg plate 87b extends downwardly beyond the the closed position of the cover 2. The top of the leg plate 87b crosses with the second axis line L2.

As indicated in Fig. 13, the second cooperation member 82 (second cooperation part) comprises an axis connection part 85 and a cooperation arm 86. The axis connection part 85 has a cylinder shape and is aligned on the second axis line. As indicated in Fig. 15 (a), this axis connection part 85 is connected to the leg plate 87b as well as the connection member 83 rotatably about the second axis line L2. As indicated in Fig. 15 (b), to the axis connection part 85, a long hole shaped axis engagement hole 85c is formed.

While detained illustrations are omitted, as similar to the first embodiment (Fig. 1-Fig. 8), the first actuator 41 of the rotation dumper 40 is engaged into the axis engagement hole 85c and is fixed rotatably to the cooperation member 82. Furthermore, the first actuator 41 and the second cooperation member 82 are joinable and separatable along with the second axis line L2. Furthermore, the second actuator 42 of the rotation dumper 40 is fixed rotatably to the rotation cover 2 through the attachment member 50.

As indicated in Fig. 11 (a), to the attachment member 50, the cover member 59 is overlain.

As indicated in Fig. 13, the cooperation link 84 is shaped to a planer plate of about an L-shape. As indicated in Fig. 15, one end of the cooperation link 84 is connected to the first cooperation member 81 rotatably about a third axis line L3. Another end of the cooperation link 84 is connected to the cooperation arm 86 of the second cooperation member 82 rotatably about a fourth axis line L4.

The four axis lines L1, L2, L3, and L4 are parallel each other and are spaced each other in the orthogonal direction to the first axis line L1.

By the first cooperation member 81, the second cooperation member 82, the connection member 83 and the cooperation link 84, a four-bar link is constructed. The first cooperation member 81 and the second cooperation member 82 are cooperated through the connection member 83 and the cooperation link 84.

As indicated in Figs. 16 (a)-(e), when the rotation cover 2 is rotated with respect to the case 1, the second cooperation member 82 is made to rotate (revolve) about the first axis line L1 with respect to the first cooperation member 81 and is made rotate (spin) about the second axis line L2 with respect to the second actuator 42. Thereby, the first actuator 41 is made to rotate with respect to the second actuator 42 to generate the braking force of the rotation dumper 40.

When the rotation cover 2 is rotated toward the open direction (in Fig. 16, clockwise direction), by the contact between the right protrusion tip 88 and the rotation cover 2 in Fig. 16 (a), the connection member 83 is made to rotate integrally with the rotation cover 2.

When the rotation cover 2 is rotated toward the close direction (in Fig. 16, counterclockwise direction), by the contact between the upper protrusion tip 88 and the rotation cover 2 in Fig. 16 (d), the connection member 83 is made to rotate integrally with the rotation cover 2.

Similar to the hinge device 3 of the first embodiment (Fig. 1-Fig. 8), according to the hinge device 3C, the first axis line L1 can be disposed at the position where the joint 9 between the case 1 and rotation cover 2 (Fig. 16 (a)) is narrow and the second axis line L2 can be disposed at the position passing the outside the rotation cover 2. Thereby, the engraving can be omitted and the appearance can be good.

The present invention is not limited to said embodiments and may be modified variously within the scope not departing from the spirit of the invention.

For example, the first cooperation part 10, 81 may be formed integrally with the case 1.

In the first embodiment (Fig. 1-Fig. 8), the first gear 11 may be formed integrally with the case 1. The connection member 30 may be formed integrally with the rotation cover 2.

The rotation cooperation means 4 may be constructed from a pair of pulleys and a timing belt. The first cooperation part and the second cooperation part may be constructed from pulleys, respectively and these pulleys may be cooperated each other by a timing belt.

The rotation cooperation means 4 may be constructed from a pair of sprockets and a chain. The first cooperation part and the second cooperation part may be constructed from sprockets, respectively and these sprockets may be cooperated each other by the chain.

In the third embodiment, the torque unit 70 (Fig. 9-Fig. 10) may be used as the actuator unit in place of the rotation dumper 40.

The actuation unit may generate any two of the braking force by the viscose resistance, the braking force by the friction resistance and the biasing force and may generate these three kinds of force.

The first axis line may be positioned at the outside of the second member. The second axis line L2 may be positioned inside of the second member.

The rotation cover 2 may construct the "first member" and the case 1 may construct the "second member". The hinge plate 10 may be disposed to the rotation cover 2 and the attachment member 50 may be disposed to the case 1.

The hinge device 3, 3C may be, not limited to the receptacle device M, applicable to a connection device for a various rotator such as a door or the like of a building and a furniture. The rotator may be, not limited to the rotation cover 2, a door and a window frame or the like.

### INDUSTRIAL APPLICABILITY

The present invention may be applicable to a hinge device for connecting a rotation cover or a door of a door device rotatably to a case or a body.

### DESCRIPTION OF SIGN

- L1: first axis line
- L2: second axis line
- L3: third axis line
- L4: fourth axis line
- M: receptacle device
- 1: case (first member)
- 2: rotation cover (second member)
- 3: hinge device
- 3C: hinge device
- 11: first gear (first cooperation part)
- 22: second gear (second cooperation part)
- 30: connection member
- 31: first pivot support
- 32: second pivot support
- 34: connection fixture
- 40: rotation dumper (actuator unit)
- 41: first actuator
- 42: second actuator
- 50: attachment member
- 70: torque unit
- 71: first actuator
- 72: second actuator
- 81: first cooperation member (first cooperation part)
- 82: second cooperation member (second cooperation part)
- 83: connection member
- 84: cooperation link

## Claims

1. A hinge device for rotatably connecting a second member to a first member;
a first cooperation part fixed rotatably to the first member;
a connection member connected to the first cooperation part rotatably about a first axis line and fixed rotatably to the second member;
a second cooperation part connected to the connection member rotatably about a second axis line parallel to the first axis line;
an actuation unit comprising a first actuator and a second actuator rotatable with respect to the first actuator about the second axis line to generate rotation affecting force by a relative rotation of the first and the second actuators each other, wherein;
the first actuator is fixed to the second cooperation part rotatably;
the second actuator is fixed to the second member rotatably; and
the first cooperation part and the second cooperation part are cooperated such that when the second member rotates with respect to the first member, the second cooperation part rotates about the first axis line with respect to the first cooperation part and rotates about the second axis line with respect to the second actuator.

2. The hinge device of claim 1, further comprising a cooperation link connected to the first cooperation part rotatably about a third axis line parallel to the first axis line and connected to the second cooperation part rotatably about a fourth axis line parallel to the first axis line.

3. The hinge device of claim 1, wherein the first cooperation part and the second cooperation part are constructed by gears meshing each other.

4. The hinge device of any one of claims 1-3, further comprising an attachment member retaining the second actuator and fixed to the second member slidably along with the second axis line and the first actuator and the second cooperation part being connected separatably.
